# EUROPÄISCHE PATENTSCHRIFT

(11) **EP 4 021 722 B1**
(45) Veröffentlichungstag und Bekanntmachung des Hinweises auf die Patenterteilung: **20.09.2023**
(21) Anmeldenummer: 20751175.9
(22) Anmeldetag: 11.08.2020
(51) Int. Cl.: B32B 17/10, B32B 3/30, B32B 17/06

(54) **VERBUNDSCHEIBE MIT INTEGRIERTER SONNENBLENDE UND VERFAHREN ZU DEREN HERSTELLUNG**
COMPOSITE PANE WITH INTEGRATED SUN SHADE AND PRODUCTION METHOD THEREOF
VITRE COMPOSITE POURVUE DE PARE-SOLEIL INTÉGRÉE ET SON PROCÉDÉ DE FABRICATION

(30) Priorität: 28.08.2019 EP 19193996
(43) Veröffentlichungstag der Anmeldung: 06.07.2022
(73) Patentinhaber: Saint-Gobain Glass France, 92400 Courbevoie (FR)
(72) Erfinder: WEBER, Patrick, 52477 Alsdorf (DE); BOTTOIS, Clément, 52064 Aachen (DE); HAMMOUD, Rayan, 51065 Köln (DE); KIZMAZ, Ali-Osman, 52146 Würselen (DE)
(74) Vertreter: Gebauer, Dieter Edmund
(86) Internationale Anmeldenummer: PCT/EP2020/072482
(87) Internationale Veröffentlichungsnummer: WO 2021/037551

(56) Entgegenhaltungen:
- WO-A1-2018/082977
- US-A1- 2015 165 965
- US-A1- 2015 370 140
- US-A1- 2018 192 477
- US-A1- 2018 207 909

## Beschreibung

Die Erfindung betrifft ein verbessertes Verfahren zur Herstellung einer Verbundscheibe mit integrierter Sonnenblende und zwei oder mehr zusätzlichen elektrischen Funktionselementen, sowie eine Verbundscheibe mit integrierter Sonnenblende und mindestens zwei weiteren elektrischen Funktionselementen sowie deren Verwendung.

Moderne Fahrzeugverglasungen werden zunehmend mit aktiv steuerbaren elektrischen Funktionselementen versehen, die Informationen anzeigen, als Leuchtmittel dienen oder die optische Transparenz der Scheiben ändern, beispielsweise LED (Light Emitting Diodes), OLED-Displays (Organic Light Emitting Diodes), OLED-Beleuchtungen oder PDLC-Folien (Polymer Dispersed Liquid Crystal). Schon aufgrund des verringerten Platzbedarfs ist es wünschenswert, die elektrischen Funktionselemente aber auch zusätzlich die erforderlichen Bedienelemente zu deren Steuerung beispielsweise durch Lamination in die gleiche Verbundscheibe zu integrieren.

Eine Windschutzscheibe mit einem schaltbaren Transparentelement als integrierte Sonnenblende ist in der WO2017/157626 A1 der Anmelderin beschrieben.

Aus der WO2016/116372 ist eine Verbundscheibe mit einem kapazitiven Schaltbereich bekannt, der in die Verbundscheibe integriert ist und die Durchsicht durch die Scheibe nicht, oder nur wenig behindert. Mit der dort beschriebenen Scheibenanordnung kann ein Schaltsignal bei Berührung der außenseitigen Oberfläche der Verbundscheibe ausgelöst werden und eine präzise Steuerung eines Schaltvorgangs erzielt werden.

WO2018082977 offenbart ein Verfahren zur Herstellung einer Scheibenanordnung, umfassend: Aufbringen einer transparenten elektrisch leitfähigen Schicht mit einem Sensorelektrode und einer transparenten kapazitiven Sensorelektronik auf einer Oberfläche einer Trägerfolie; Herstellen einer Stapelfolge aus einer ersten Scheibe, einer ersten Zwischenschicht, einer zweiten Zwischenschicht und einer zweiten Scheibe, wobei die Trägerfolie zumindest abschnittsweise zwischen der ersten Scheibe und der ersten Zwischenschicht angeordnet wird, ein elektro-optisches Funktionselement zwischen der ersten Zwischenschicht und der zweiten Zwischenschicht angeordnet wird, und Laminieren der Stapelfolge. US2015165965 offenbart eine Verbundscheibe mit integrierter elektrisch regelbarer Sonnenblende umfassend eine Innenscheibe und eine Außenscheibe, die über eine thermoplastischen Zwischenschicht miteinander verbunden sind, wobei die Verbundscheibe in der thermoplastischen Zwischenschicht mindestens in einem Teilabschnitt ein elektrisch regelbares SPD Element und Dioden enthält, und weiterhin in einem definierten Bedienbereich auf der Innenscheibe mindestens ein transparentes Multi-Touch-Bedienpanel zur Steuerung mindestens eines elektrischen Funktionselements angeordnet ist.

Gerade im Bereich der Windschutzscheiben für Kraftfahrzeuge sind die Ansprüche an die optische Qualität unter den Gesichtspunkten der Sicherheit, aber auch des ästhetischen Erscheinungsbilds der Verbundscheiben besonders hoch. Aber auch außerhalb dieses speziellen Bereichs der Fertigung von Windschutzscheiben besteht der Wunsch und auch der Bedarf, immer mehr Funktionalitäten in optisch ansprechender Weise und in qualitativ hochwertiger Ausführung in Verbundscheiben zu integrieren und separate Funktions- und Bedienelemente mit deren Integration in die Verbundscheibe zu ersetzen. Die Steuerung von elektrischen Funktionselementen wird dabei immer komplexer und anspruchsvoller.

Demnach besteht die Aufgabe der vorliegenden Erfindung darin, ein gegenüber dem Stand der Technik verbessertes Verfahren zur Herstellung einer Verbundscheibe mit integrierter Sonnenblende und mindestens zwei weiteren in die Verbundscheibe integrierten elektrischen Funktionselementen bereitzustellen. Zudem soll das Verfahren auch in der industriellen Serienfertigung eine einfache und kostengünstige Herstellung von Verbundscheiben mit einer Vielzahl von Funktions- und Bedienelementen ermöglichen, die auch die Ausführung und Steuerung komplexer Funktionen erlauben. Aufgabe ist es weiterhin, Verbundscheiben mit einer integrierten Sonnenblende und mehreren in die Verbundscheibe integrierten elektrischen Funktionselementen bereitzustellen, die eine gegenüber dem Stand der Technik, verbesserte optische Qualität aufweisen.

Diese und weitere Aufgaben werden nach dem Vorschlag der Erfindung durch ein Verfahren zur Herstellung einer Verbundscheibe gemäß dem unabhängigen Patentanspruch gelöst. Vorteilhafte Ausgestaltungen der Erfindung ergeben sich aus den Unteransprüchen.

Erfindungsgemäß wird ein Verfahren zur Herstellung einer Verbundscheibe mit einer integrierten Sonnenblende bereitgestellt, welches die folgenden Schritte umfasst:
- Bereitstellen einer Innenscheibe mit mindestens einem definierten Bedienbereich für mindestens ein Schaltelement zur Steuerung mindestens eines elektrisch regelbaren Funktionselements,
- Auflegen einer thermoplastischen Folie mit einem darauf angebrachten transparenten Multi-Touch-Bedienpanels als Schaltelement auf mindestens einen Bedienbereich der Innenscheibe,
- Auflegen einer ersten thermoplastischen Schicht, wobei diese eine Ausnehmung zur Aufnahme des Multi-Touch-Bedienpanels und der thermoplastischen Folie aufweist,
- Auflegen einer zweiten thermoplastischen Schicht, die mindestens in einem Teilabschnitt ein Transmissionsschaltelement als erstes elektrisches Funktionselement und mindestens ein zweites elektrisches Funktionselement enthält und diese rahmenförmig umgibt,
- Auflegen einer dritten thermoplastischen Schicht
- Auflegen einer Außenscheibe
- Verbinden einer so gebildeten Schichtfolge zu einer Verbundscheibe mittels Einwirkung von Hitze, Druck und/oder Vakuum.

Erfindungsgemäß wird mit anderen Worten eine Verbundscheibe hergestellt, welche mindestens eine Außenscheibe und eine Innenscheibe umfasst, die durch eine thermoplastische Zwischenschicht fest miteinander verbunden sind. Beim Verbinden zu der erfindungsgemäßen Verbundscheibe wird dabei eine Schichtfolge, auch Stapelfolge genannt, aus Außenscheibe, Innenscheibe und einem zwischenliegenden Schichtstapel aus mehreren Einzelschichten beispielsweise laminiert, wobei die thermoplastische Zwischenschicht durch Lamination des Schichtstapels aus den Einzelschichten erzeugt wird. Der Begriff "Zwischenschicht" bezieht sich demnach auf eine durch Verbinden mehrerer verschiedener Einzelschichten erzeugte Gesamtschicht, die dann zwischen Außenscheibe und Innenscheibe angeordnet ist. Die thermoplastische Zwischenschicht kann insbesondere verschiedene thermoplastische Materialien aufweisen, die auf mehreren Einzelschichten thermoplastischer Materialien basieren. Erfindungsgemäß sind in der Zwischenschicht mindestens ein erstes elektrisches Funktionselement, nämlich ein Transmissionsschaltelement und mindestens ein zweites elektrisches Funktionselement, sowie mindestens ein transparentes Multi-Touch-Bedienpanel zur Steuerung mindestens eines elektrisch regelbaren Funktionselements, integriert, wobei gleichzeitig eine gegenüber dem Stand der Technik verbesserte, hohe optische Qualität der resultierenden Verbundscheibe erzielt wird. Die erfindungsgemäß hergestellte Verbundscheibe kann auch den höheren Anforderungen und Vorschriften im Bereich der Windschutzscheiben von Fahrzeugen genügen. Durch die Integration des Multi-Touch-Bedienpanels wird es möglich, auch komplexere Schaltvorgänge und -kombinationen zu realisieren, beispielsweise auch mehrere Funktionselemente gleichzeitig zu steuern.

Als Außenscheibe und Innenscheibe sind im Grunde alle elektrisch isolierenden Substrate geeignet, die unter den Bedingungen der Herstellung und der Verwendung der erfindungsgemäßen Verbundscheibe thermisch und chemisch stabil sowie dimensionsstabil sind.

Die Begriffe "Außenscheibe" und "Innenscheibe" sind lediglich zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Verbundscheibe beispielsweise dafür vorgesehen, in einer Öffnung, beispielsweise eines Fahrzeugs oder eines Gebäudes, den Innenraum gegenüber der äußeren Umgebung abzutrennen, so ist die Außenscheibe in der Regel der äußeren Umgebung zugewandt, wohingegen die Innenscheibe dem Innenraum zugewandt ist.

Die Scheiben enthalten bevorzugt Glas, besonders bevorzugt Flachglas, ganz besonders bevorzugt Floatglas, wie Kalk-Natron-Glas, Borosilikatglas oder Quarzglas, oder bestehen daraus. Alternativ können die Scheiben klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon enthalten oder daraus bestehen.

Die Scheiben sind bevorzugt transparent, insbesondere für die Verwendung der Scheiben als Windschutzscheibe oder Rückscheiben eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke der Scheiben kann breit variieren und so den Erfordernissen des Einzelfalls angepasst werden. Vorzugsweise werden Standardstärken der einzelnen Scheiben von 1,0 mm bis 25 mm, beispielsweise von 1,1 mm bis 2,0 mm bevorzugt von 1,4 mm bis 2,5 mm, beispielsweise 1,6 mm oder 2,1 mm für Fahrzeugglas und bevorzugt von 4 mm bis 25 mm für Möbel, Geräte und Gebäude, verwendet. Die Größe der Scheiben kann breit variieren und richtet sich nach der Größe der erfindungsgemäßen Verwendung. Die erste Scheibe und zweite Scheibe weisen beispielsweise im Fahrzeugbau und Architekturbereich übliche Flächen von 200 cm² bis zu 20 m² auf.

Im Sinne vorliegender Erfindung ist unter einem "elektrischen Funktionselement" ein aktives elektrisches Bauteil zu verstehen, das steuerbar ist und mit einer elektrischen Versorgungs- bzw. Steuerspannung beaufschlagt wird. Jedes elektrische Funktionselement ist mit einer elektrischen Anschlussleitung versehen, welche einen laminierten Teil umfasst. Im Sinne der Erfindung ist der in der thermoplastischen Zwischenschicht befindliche, laminierte Teil der elektrischen Anschlussleitung des elektrischen Funktionselements ein Bestandteil des elektrischen Funktionselements. Der Begriff "Anschlussleitung" bezeichnet sämtliche elektrische Leiter, an die das elektrische Funktionselement angeschlossen ist. Anschlussleitungen und Kontaktierungen können auf bekannte Weise durch bekannte Verfahren, beispielsweise Siebdruck, hergestellt werden, die nicht näher erläutert werden müssen. Die Kontaktierung von Funktionselementen erfolgt bevorzugt vor dem Verbinden zur Verbundscheibe. Vorzugsweise haben solche Anschlussleiter eine Dicke von unter 200 µm, besonders bevorzugt zwischen 50 µm bis 100 µm.

Im erfindungsgemäßen Verfahren wird in einem ersten Schritt eine Innenscheibe mit mindestens einem definierten Bedienbereich für mindestens ein Schaltelement zur Steuerung mindestens eines elektrisch regelbaren Funktionselements bereitgestellt. Auf der Innenscheibe wird mit anderen Worten mindestens ein Teilbereich auf der Scheibe bestimmt, gegebenenfalls markiert, in dem ein oder mehrere Schaltelemente realisiert und ausgestaltet werden sollen. Der Bedienbereich ist zweckmäßigerweise so ausgestaltet und angeordnet, dass er für eine Bedienperson gut erreichbar und nutzbar ist und die zugedachte Verwendung der Verbundscheibe, sowie die ausgestalteten Funktionselemente nicht beeinträchtig werden. Beispielsweise sind die erfindungsgemäß integrierten Schaltelemente flächenmäßig so ausgestaltet, dass sie problemlos mit einem oder mehreren Fingern bedient werden können. Bei Windschutzscheiben sind Bedienbereiche vorzugsweise nicht im zentralen Sichtfeld des Fahrers anzuordnen.

Schaltelemente sind im Sinne der Erfindung insbesondere solche, die in die Verbundscheibe im Bedienbereich integriert werden und zum Steuern und Auslösen von Schaltvorgängen von vorgesehenen elektrischen Funktionselementen dienen können.

In einem zweiten Schritt des erfindungsgemäßen Verfahrens, wird eine thermoplastische Folie mit einem darauf angebrachten transparenten Multi-Touch-Bedienpanel als Schaltelement auf mindestens einen Bedienbereich der Innenscheibe aufgelegt. Insbesondere wird erfindungsgemäß so mindestens ein Bedienbereich zur Verfügung gestellt, der ein transparentes Multi-Touch Bedienpanel umfasst und so eine aktive Schaltfläche realisiert.

Unter einem Multi-Touch-Bedienpanel wird erfindungsgemäß mindestens eine aktive, kapazitive Schaltfläche verstanden, die nicht nur einen, sondern auch zwei oder mehr Berührungspunkte zeitgleich erkennen und auflösen kann. Das Erkennen mindestens einer zweiten Berührung auf der Schaltfläche bietet einem Bediener erweiterte Eingabemöglichkeiten. Durch die Multi-Touch Schaltmöglichkeit ist es beispielsweise möglich, zwei oder mehr Funktionselemente gleichzeitig, oder ein Funktionselement mit mehreren und/oder komplexeren Schaltvorgängen zu steuern. Neben der einfachen Berührung sind auch komplexe Gesten, wie Drehen, Zoomen und Sliden zur Schaltung und Steuerung möglich. Mit anderen Worten erlaubt es die Erfindung, eine effektive Steuerung einer Vielzahl von Funktionselementen oder von Funktionselementen mit einer Vielzahl und/oder komplexen Schaltvorgängen mit einer geringen oder geringeren Anzahl von Schaltelementen zur Verfügung zu stellen, als dies bisher möglich war.

Für die Ausgestaltung kapazitiver Multi-Touch-Bedienpanele stehen bereits unterschiedliche Techniken zur Verfügung, die für den Einsatz im erfindungsgemäßen Verfahren geeignet sind. Eine erfindungsgemäß bevorzugte Ausgestaltung ist die Konstruktion aus Leiterbahnen oder das Auftragen transparenter leitfähiger Materialien, wie Indiumzinnoxid (ITO) auf eine Sandwich-Filmschicht aus einer Polyethylenterephthalat(PET)-, Polyester- oder Polyethylen-Trägerfolie.

Hierbei wird das elektrische Sensorfeld für die Multi-Touch-Bedienung mit Hilfe von zwei Indiumzinnoxid-beschichteten und rasterförmig entschichteten Polyethylenterephthalat (PET)-, Polyester- oder Polyethylenlagen geschaffen.

Die so beschichtete Trägerfolie kann beispielsweise eine Dicke von 0,46 mm aufweisen. Die Trägerfolie kann auf ihrer Oberfläche die die Leiterbahnen trägt selbstklebend sein und so mit dieser auf die thermoplastische Folie geklebt und mit dieser verbunden werden. Mit anderen Worten kann erfindungsgemäß ein Einleger aus thermoplastischer Folie, Leiterbahnen und Trägerfolie erzeugt werden, wobei dann nachfolgend die Seite des Einlegers mit der thermoplastischen Folie auf die Innenscheibe gelegt wird. Erfindungsgemäß ist es aber gleichermaßen möglich, dass zunächst die thermoplastische Folie auf den Bedienbereich der Innenscheibe aufgelegt und dann das Multi-Touch-Bedienpanel aufgelegt, und gegebenenfalls, beispielsweise durch Klebung verbunden wird. Ebenfalls kann durch eine Klebung ein Verrutschen des Einlegers, beziehungsweise des Multi-Touch-Bedienpanels verhindert und so die richtige Positionierung sichergestellt werden, bis die Scheibe endgültig verbunden wird. Hierdurch wird die Handhabung während des Verfahrens erleichtert.

Die thermoplastische Folie, die im Bedienbereich auf die Oberfläche der Innenscheibe aufgelegt wird, ist vergleichsweise dünn. Beispielsweise kann dies eine Folie aus Polyvinylbutyral (PVB) sein, die eine Dicke von 25 µm bis 100 µm, vorzugsweise etwa 50 µm, beispielsweise 51 µm aufweist. Die Größe der thermoplastischen Folie und auch des dann darauf angeordneten Multi-Touch-Bedienpanels, ist auf die des Bedienbereichs abgestimmt und nimmt daher nur einen vergleichsweise kleinen Teilbereich der Fläche der Innenscheibe ein. Der Bedienbereich kann beispielsweise eine Fläche mit einer Diagonalen von 7 Zoll bis 10 Zoll, insbesondere 4,3 Zoll, aber auch 3,5 Zoll aufweisen.

Vorzugsweise wird im erfindungsgemäßen Verfahren die Grundfläche der thermoplastischen Folie, die lokal über dem Multi-Touch-Sensorfeld zur Innenscheibe gerichtet angeordnet ist, größer gewählt, als die des Multi-Touch-Bedienpanels. Insbesondere überlappt die Fläche der thermoplastischen Folie die Trägerfolie mit den Leiterbahnen des Multi-Touch-Sensorfelds um 1 mm bis 10 mm, bevorzugt um 2 mm bis 5 mm. Mit anderen Worten weist die thermoplastische Folie eine größere Grundfläche auf als das Multi-Touch-Bedienpanel und bildet zu diesem in der Draufsicht einen Rahmen, also überlappt dieses, so dass sich in der Dicke des Einlegers, beziehungsweise Verbunds aus thermoplastischer Folie und Multi-Touch-Bedienpanel eine zweckmäßig geringe Abstufung zur Oberfläche der Innenscheibe ergibt und so eine verspannungsarme und verzerrungsfreie Verbindung ermöglicht. Durch die vorgesehene Überlappung kann so nach dem Verbindungsschritt ein optisch besseres Erscheinungsbild, insbesondere an den Kanten des Multi-Touch-Bedienpanels erhalten werden.

Überraschend konnte durch die erfindungsgemäße Anordnung des Multi-Touch-Bedienpanels auf der thermoplastischen Folie auch insgesamt die Qualität und das optische Erscheinungsbild der erfindungsgemäß hergestellten Verbundscheibe verbessert werden. Diese Verbesserung ergibt sich unter anderem daraus, dass optische Verzerrungen weitestgehend vermieden werden. Die Leiterbahnen des Multi-Touch-Bedienpanels werden zudem in der resultierenden Verbundscheibe durch das thermoplastische Material der Folie auf Seiten der Innenscheibe umschlossen und hierdurch fixiert und stabilisiert. Die Leiterbahnen werden so beispielsweise vor Erschütterungen, Vibrationen und anderen mechanischen Belastungen, beispielsweise vor einem Bruch wirkungsvoll geschützt und in Position gehalten. Die Touch-Funktionalität und die Empfindlichkeit der Schaltelemente im Bedienbereich auf der außenseitigen Oberfläche der Innenscheibe sind dabei weiterhin ausreichend, so dass die Bedienbarkeit durch Berührung einer Bedienperson vorteilhafterweise nicht eingeschränkt wird.

In einem dritten Schritt des erfindungsgemäßen Verfahrens wird eine erste thermoplastische Schicht aufgelegt. Die erste thermoplastische Schicht, weist eine Ausnehmung zur Aufnahme des Multi-Touch-Bedienpanels und der thermoplastischen Folie auf. Durch das Vorsehen der passenden Ausnehmung wird vorteilhafterweise der sonst entstehende Höhenunterschied entsprechend ausgeglichen und sorgt für eine verspannungsarme und von optischen Verzerrungen freie Verbindung in der resultierenden Verbundscheibe. Die Dicke der thermoplastischen Schicht kann auf die jeweils eingesetzten Schaltelemente abgestimmt werden, um beispielsweise Glasbruch durch einen lokalen Dickenunterschied durch die eingesetzten Schaltelemente zu vermeiden und eine optisch einwandfreie Verbindung herzustellen. Eine Überlappung am Rand des Multi-Touch-Bedienpanels wird, wie vorstehend beschrieben, gering gehalten, so dass durch den erfindungsgemäß zusätzlichen Einsatz der thermoplastischen Folie kein Stress im Glas entstehen kann und vorteilhafterweise, insbesondere im Bereich des Sensorelements (Multi-Touch-Bedienpanel) das optische Erscheinungsbild verbessert und gleichzeitig qualitativ eine Verbesserung erzielt wird.

Unter thermoplastischer Schicht wird erfindungsgemäß in der horizontalen Richtung eine Einzelschicht aus thermoplastischem Material verstanden, die im Wesentlichen in ihrer Fläche mit der Innenscheibe und der Außenscheibe übereinstimmen. Die thermoplastischen Schichten werden gewöhnlich flächig aufeinander angeordnet und sind transparent. In Bereichen mit Funktionselementen können die Schichten Ausschnitte, Ausnehmungen aufweisen. In den Bereichen wo thermoplastische Schichten direkten Kontakt zueinander haben, können sie beim Laminieren miteinander verschmelzen, so dass die ursprünglichen Schichten gegebenenfalls nicht mehr erkennbar sind und eine homogene Zwischenschicht resultiert.

Im vierten Schritt des erfindungsgemäßen Verfahrens wird eine zweite thermoplastische Schicht aufgelegt, die mindestens in einem Teilabschnitt ein Transmissionsschaltelement als erstes elektrisches Funktionselement und mindestens ein zweites elektrisches Funktionselement enthält und diese rahmenförmig umgibt. Mit anderen Worten wird die zweite thermoplastische Schicht flächig auf der ersten thermoplastischen Schicht angeordnet. Vorzugsweise wird die Dicke der thermoplastischen Schicht so gewählt, dass sie der des Transmissionsschaltelements entspricht. Beispielsweise kann die zweite thermoplastische Schicht eine Dicke von 0,3 mm bis 0,5 mm, beispielweise 0,38 mm aufweisen.

Soweit in der folgenden Beschreibung Transmissionsschaltelement, transparent und opak verwendet wird, ist hiermit jegliche Beeinflussung der Transparenz gemeint. Dabei kann auch eine Änderung der Farbe zu einer Beeinflussung der Transparenz in einem beschränkten Wellenlängenbereich (des sichtbaren Lichtes) führen. D.h. ein Transmissionsschaltelement kann binär als auch stufig von einer insbesondere im sichtbaren Lichtbereich zumindest teilweise durchsichtigen ("transparent") in einen weniger stark durchsichtigen ("opaken") Zustand versetzt werden. Hierzu kann eine geeignete Spannung bzw. ein geeigneter Strom in Bezug auf das jeweilige Transmissionsschaltelement eingeprägt werden. In bevorzugten Ausführungsformen der Erfindung sind die Transmissionsschaltelemente als Flüssigkristallelement, insbesondere als Polymer-Flüssigkristallelement (engl. polymer dispersed liquid crystal, abgekürzt PDLC), insbesondere als PDLC-Mehrschichtfolie, oder als Polymer Dispersed Network Display (PNLC), als reverse mode PDLC- oder als elektrochromes Transmissionsschaltelement ausgeführt. Grundsätzlich sind solche Funktionselemente mit optisch regelbaren Eigenschaften und deren Funktionsweise an sich bekannt, so dass an dieser Stelle auf eine ausführliche Beschreibung verzichtet werden kann.

Eine PDLC-Mehrschichtfolie, die erfindungsgemäß als Transmissionsschaltelement eingesetzt werden kann, kann beispielsweise eine Dicke von 0,4 mm aufweisen. Die thermoplastische Schicht kann durch eine zusammenhängende thermoplastische Folie gebildet werden, in welche Ausnehmungen beispielsweise durch Ausschneiden eingebracht werden, in die die Funktionselemente eingesetzt oder eingelegt werden können. Die thermoplastische Schicht ist mit anderen Worten rahmenartig um die Funktionselemente ausgebildet. Alternativ kann die zweite thermoplastische Schicht auch aus mehreren Folienabschnitten um die Funktionselemente zusammengesetzt angeordnet werden. Die zweite thermoplastische Schicht kann bevorzugt eine thermoplastische Schicht aus Polyvinylbutyral (PVB) sein, die in ihrer Dicke, der der PDLC-Mehrschichtfolie und der des zweiten Funktionselements vorzugsweise ungefähr angepasst ist. Optische Verzerrungen oder ein Glasbruch beim Verbinden kann durch die so bewerkstelligte Kompensation der Dicke vermieden werden.

Als ein fünfter Schritt im erfindungsgemäßen Verfahren ist das Auflegen einer dritten thermoplastischen Schicht vorgesehen. Diese kann beispielsweise eine Polyvinylbutyral (PVB) Schicht sein. Durch diese dritte thermoplastische Schicht werden das Transmissionsschaltelement und das zweite elektrische Funktionselement in der Zwischenschicht gleichermaßen eingebettet und mit der Außenscheibe verbunden.

Der sechste Schritt beinhaltet das Auflegen einer Außenscheibe. Die Außenscheibe bildet den Abschluss der wie vorstehend beschrieben hergestellten Schichtfolge.

Das Verbinden der in den vorherigen Verfahrensschritten gebildeten Schichtfolge zur Verbundscheibe erfolgt als siebter Verfahrensschritt bevorzugt unter Einwirkung von Hitze, Vakuum und/oder Druck. Es können an sich bekannte Verfahren zur Herstellung einer Verbundscheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80°C bis 110 °C. Die Außenscheibe, die thermoplastische Zwischenschicht und die Innenscheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Scheiben innerhalb von beispielsweise etwa 60 Minuten bei verminderten Drücken von 0,01 mbar bis 800 mbar und Temperaturen von 80°C bis 170°C laminiert werden.

Die erste thermoplastische Schicht, die zweite thermoplastische Schicht, die dritte thermoplastische Schicht und gegebenenfalls auch die vierte thermoplastische Schicht enthalten bevorzugt zumindest Polyvinylbutyral (PVB), Ethylenvinylacetat (EVA) und / oder Polyurethan (PU), besonders bevorzugt PVB oder bestehen daraus.

Die Dicke jeder thermoplastischen Schicht beträgt bevorzugt von 0,2 mm bis 2 mm, besonders bevorzugt von 0,3 mm bis 1 mm, insbesondere von 0,3 mm bis 0,9 mm, beispielsweise 0,38 mm, 0,51 mm, 0,78 mm, 0,81 mm. Solche thermoplastischen Folien sind kommerziell erhältlich.

In einer bevorzugten Ausführungsform der Erfindung umfasst der Schritt des Verbindens der Schichtfolge zur Verbundscheibe als Teilschritte
a) - eine Pre-Lamination in einem Temperaturbereich von 40-150 °C, beispielsweise bei 90 °C, und/oder eine
b) - eine Autoklavbehandlung.
Sowohl durch die Durchführung Teilschritte a) oder b) im Einzelnen als auch durch die kombinierte Ausführung beider Teilschritte zum Verbinden der Schichtfolge aus Innenscheibe, Außenscheibe und den die Zwischenschicht ausbildenden thermoplastischen Einzelschichten kann eine verbesserte optische Qualität der resultierenden Verbundscheibe erzielt und eine dauerhafte, stabile Haftung hergestellt werden.

In einer bevorzugten Ausgestaltung des erfindungsgemäßen Verfahrens ist vorgesehen, dass die Pre-Lamination im Teilschritt a) über einen Zeitraum von 10 Minuten bis 25 Stunden, besonders bevorzugt zwischen 15 Minuten und 5 Stunden, beispielsweise über einen Zeitraum von 20 Minuten, 30 Minuten, 45 Minuten, einer Stunde, 2 Stunden, 3 Stunden oder 4 Stunden ausgeführt wird.

In einer weiteren Ausführung des Verfahrens ist als ein Schritt vorgesehen, dass mindestens ein weiterer Bedienbereich für mindestens ein Schaltelement zur Steuerung mindestens eines elektrischen Funktionselements definiert wird, wobei bevorzugt mindestens ein Schaltelement als Touch-Button ausgestaltet wird und im Bedienbereich zwischen der Innenscheibe und dem Schaltelement eine thermoplastische Folie aufgebracht ist. Erfindungsgemäß werden hierdurch die Bedienmöglichkeiten zur Steuerung von Funktionselementen erweitert. Beispielsweise ist es bei einer Windschutzscheibe eines Fahrzeugs so möglich, beispielsweise eine Bedienung einer integrierten Sonnenblende als Funktionselement durch den Fahrer, durch ein Schaltelement auf der linken Seite der Scheibe in Bezug auf die Einbaulage und auch durch den Beifahrer, durch ein Schaltelement auf der rechten Seite der Scheibe in dort definierten Bedienbereichen zu realisieren. Alternativ und zusätzlich können zusätzliche Bedienbereiche mit Schaltelementen geschaffen werden, die zusätzliche Funktionselemente ansteuern können.

Durch das erfindungsgemäße Anordnen einer thermoplastischen Folie im Bedienbereich kann insgesamt die Qualität und das optische Erscheinungsbild der erfindungsgemäß hergestellten Verbundscheibe verbessert werden. Diese Verbesserung ergibt sich unter anderem daraus, dass optische Verzerrungen in diesem Bedienbereich weitestgehend vermieden werden. Weiterhin können die Schaltelemente durch das thermoplastische Material der Folie auf Seiten der Innenscheibe fixiert, umschlossen und hierdurch stabilisiert werden. Insbesondere die Leiterbahnen, also beispielsweise die Indiumzinnoxid Beschichtungen werden so beispielsweise vor Erschütterungen, Vibrationen und anderen mechanischen Belastungen, beispielsweise vor einem Bruch wirkungsvoll geschützt und in Position gehalten. Die Touch-Funktionalität und die Empfindlichkeit der Schaltelemente im Bedienbereich auf der außenseitigen Oberfläche der Innenscheibe sind dabei weiterhin ausreichend, so dass die Bedienbarkeit durch Berührung einer Bedienperson vorteilhafterweise nicht eingeschränkt wird. Erfindungsgemäß ist es auch möglich Funktionselemente, beispielsweise ein Transmissionsschaltelement auch durch kontaktfreie Verfahren, beispielsweise durch das Erkennen von Gesten im Nahbereich, insbesondere des Multi-Touch-Bedienpanels, oder in Abhängigkeit des durch eine Kamera und geeignete Auswerteelektronik festgestellten Zustands von Pupille oder Augenlid zu steuern.

In einer anderen Ausführungsform der Erfindung wird im erfindungsgemäßen Verfahren die thermoplastische Folie auf der das Multi-Touch-Bedienpanel und/oder andere Schaltelemente im Bedienbereich angeordnet werden, jeweils auf einer Seite mit einer aufgerauten Oberfläche eingesetzt. Die aufgeraute Seite der thermoplastischen Folie wird dabei auf die Oberfläche der Innenscheibe aufgelegt. Durch diese Maßnahme im erfindungsgemäßen Verfahren kann überraschenderweise eine Verbundscheibe mit einem optisch besseren Erscheinungsbild im Bedienbereich erhalten werden, wobei vorteilhafterweise die Funktionalität und Berührungsempfindlichkeit der Schaltelemente, insbesondere des Multi-Touch-Bedienpanels und der Touch-Buttons nicht, oder zumindest nicht wesentlich beeinträchtigt wird. Die aufgeraute Oberfläche kann während des Verbindungsschritts, also beispielsweise während der Laminierung und/oder einer Autoklav-Behandlung zu einer besseren Entlüftung führen und eine Blasenbildung kann leichter vermieden werden.

Thermoplastische Folien, beispielsweise Polyvinylbutyral-Folien mit einer aufgerauten Oberfläche, die für den Einsatz in das erfindungsgemäße Verfahren geeignet sind, sind kommerziell erhältlich und brauchen lediglich auf die gewünschte Größe für den Einsatz zur Herstellung der Verbundscheibe zugeschnitten werden. Aufgeraute Oberflächen auf ansonsten geeigneten Folien können beispielsweise auch durch Prägung, beispielsweise mit einem entsprechenden Stempel und Druckanwendung oder durch abrasive Verfahrensschritte hergestellt werden. Solche Verfahren sind an sich bekannt und müssen nicht näher erläutert werden.

In einer bevorzugten Ausgestaltung des erfindungsgemäßen Verfahrens ist vorgesehen, dass die dritte thermoplastische Schicht einen gefärbten oder getönten Teilabschnitt aufweist, der das Transmissionsschaltelement überlappt und/ oder die dritte thermoplastische Schicht weiterhin in einer dafür vorgesehenen Ausnehmung ein drittes elektrisches Funktionselement enthält. Mit anderen Worten verdeckt der getönte oder gefärbte Bereich der dritten thermoplastischen Schicht das Transmissionsschaltelement, beispielsweise einer PDLC-Mehrschichtfolie, oder steht sogar etwas über, erstreckt sich also flächenmäßig weiter als das Transmissionsschaltelement. Dadurch wird ein besonders ansprechendes Erscheinungsbild von der Außenseite der Verbundscheibe erzeugt.

Die dritte thermoplastische Schicht kann durch eine einzelne thermoplastische Folie ausgebildet werden, in der der getönte oder gefärbte Bereich durch lokales Tönen oder Färben erzeugt wird. Solche Folien sind beispielsweise durch Koextrusion erhältlich. Alternativ können ein ungetönter Folienabschnitt und ein getönter oder gefärbter Folienabschnitt zur thermoplastischen Schicht zusammengesetzt werden.

In einer weiteren bevorzugten Ausführung des Verfahrens ist vorgesehen zwischen der ersten thermoplastischen Schicht und der zweiten thermoplastischen Schicht eine vierte thermoplastische Schicht mit einem gefärbten Teilabschnitt einzulegen, wobei der gefärbte Teilabschnitt das Transmissionsschaltelement, also beispielsweise ein PDLC-Funktionselement zumindest größtenteils überlappt. Durch diese erfindungsgemäße Maßnahme kann die resultierende Verbundscheibe sowohl auf der Innen- als auch auf der Außenseite im Teilbereich des Transmissionsschaltelements, also im Bereich der damit realisierten integrierten Sonnenblende, optisch ansprechender ausgestaltet werden.

Eine bevorzugte Variante des erfindungsgemäßen Verfahrens sieht vor, dass in der dritten und/oder vierten thermoplastischen Schicht mindestens ein weiteres elektrisches Funktionselement eingesetzt wird. Vorteilhafterweise ist es erfindungsgemäß möglich eine Vielzahl von Funktionen in die Verbundscheibe zu integrieren. Beispiele für Funktionselemente sind Lichteinstrahlmittel, wie Leuchtioden (LED), OLED-Beleuchtungen, OLED Displays, insbesondere transparente OLED-Displays, Thin Film Electroluminenscence (TFELs) und transparente LEDs und transparente OLEDs, Micro LEDs sowie reflektionsoptimierte transparente Folien für Projektion und Kameras ohne hierauf beschränkt zu sein.

Lichteinstrahlmittel umfasst erfindungsgemäß zumindest eine Lichtquelle, bevorzugt eine LED oder OLED. Der besondere Vorteil liegt in den kleinen Abmessungen und der geringen Leistungsaufnahme. Der von der Lichtquelle emittierte Wellenlängenbereich kann im Bereich des sichtbaren Lichtes frei gewählt werden, beispielsweise nach praktischen und / oder ästhetischen Gesichtspunkten. Das Lichteinstrahlmittel kann optische Elemente umfassen, insbesondere zur Lenkung des Lichts, bevorzugt einen Reflektor und / oder einen Lichtwellenleiter, beispielsweise eine Glasfaser oder eine polymere optische Faser. Das Lichteinstrahlmittel kann beispielsweise in einer kleinen Ausnehmung in einer thermoplastischen Schicht vorgesehen und so in die Zwischenschicht eingebettet werden.

Gemäß einer bevorzugten Ausgestaltung der Erfindung weist das Verfahrens weiterhin einen Schritt auf, in dem in der dritten thermoplastischen Schicht eine LED (Light Emitting Diode) mit einem Flachbandleiter in eine Ausnehmung einsetzt wird und wobei mindestens zwischen dem Flachbandleiter und der Außenscheibe eine thermoplastische Folie vorgesehen wird. Vorzugsweise ist die Dicke der dritten thermoplastischen Schicht in der Dicke der Ausnehmung, die für die LED vorgesehen werden muss, gewählt. Vorteilhafterweise kann hierdurch eine Blasenbildung durch Luftraumbildungen vermieden werden und eine verspannungsarme und verzerrungsfreie Verbindung erzielt werden. Der Flachbandleiter wird vorzugsweise in seiner Dicke dem finalen Produkt angepasst. Als thermoplastische Folie die zwischen Flachbandleiter und er Außenscheibe angeordnet wird, kann beispielsweise eine dünne, beispielsweise eine 50 µm dicke Polyvinylbutyral (PVB) Folie eingesetzt werden. Diese bildet vorteilhafterweise eine Diffusionssperre aus.

In einer weiteren Ausführungsform des erfindungsgemäßen Verfahrens werden in einem Schritt in einem oder mehreren Teilbereichen auf der Innenscheibe und/oder der Außenscheibe Lichtleitmittel, Maskierungsmittel und / oder Markierungsmittel vorgesehen.

Das Lichtleitmittel und Markierungs- und Maskierungsmittel umfassen bevorzugt Aufkleber, Siebdrucke, Punktraster, Anlagerungen, Einkerbungen, Einritzungen, Strichraster, und/ oder Aufdrucke und / oder Siebdrucke.

Lichtleitmittel sind dazu geeignet, das in der Innenscheibe der Zwischenschicht oder der Außenscheibe transportierte Licht aus derselben auszukoppeln. Beispielsweise kann bei der Gestaltung von Logos oder Piktogrammen, beispielsweise mit LED als Lichteinstrahlmittel durch schwarze Aufkleber, beispielsweise auf der innenseitigen Oberfläche der Innenscheibe eine Lichtleitung im Verbund, bewerkstelligt werden und der Eintrag von Streulicht der LED in den Innenraum bei der Ausgestaltung verhindert werden. Dies kann beispielsweise bei der Ausgestaltung eines Blindspot-Piktogramms mit LED, also zur Anzeige der Anwesenheit von Gegenständen, Personen oder Fahrzeugen im Totwinkel, eingesetzt werden.

Lichtleitmittel können nahezu an jeder beliebigen Position auf der Ebene der Verbundscheibe auf der Innenscheibe, der Außenscheibe oder der Zwischenschicht angeordnet sein. Besonders vorteilhaft ist es, wenn das Lichtablenkmittel im Bereich oder in der unmittelbaren Umgebung des Bedienbereichs und der Schaltelemente, beispielsweise der aktiven Multi-Touch-Schaltfläche angeordnet ist und so ein schnelles Auffinden des ansonsten kaum sichtbaren Berührungsbereichs ermöglicht.

Weiterhin können Maskierungsmittel zur Abdeckung von Funktionselementen oder deren Teilen, beispielsweise zur Abdeckung von Anschlussleitungen eingesetzt werden. Eine übliche Maßnahme ist zum Beispiel das Vorsehen einer Randabdeckung durch einen schwarzen oder weißen Aufdruck, beispielsweise Siebdruck, der die aus der Verbundscheibe herausgeführten Anschlussleitungen verdeckt. Dies kann das optische Erscheinungsbild der resultierenden Verbundscheibe deutlich verbessern.

Markierungsmittel dienen der Markierung bestimmter Bereiche oder Funktionen. Beispielsweise ist bevorzugt der Bedienbereich und/oder die Schaltelemente durch Siebdruck markiert. Dieser Siebdruck kann beispielsweise auf der innenseitigen Oberfläche, in die Verbundscheibe hinein gerichtete, Oberfläche der Innenscheibe oder auf der dem Bediener zugewandten außenseitigen Oberfläche der Innenscheibe aufgebracht sein. Die Anbringung auf der innenseitigen Oberfläche weist dabei eine brillantere Optik auf, die Anbringung auf der außenseitigen Oberfläche hat den Vorteil, dass zusätzlich die Markierung haptisch erfasst werden kann. Dies kann beispielsweise einem Fahrer eines Fahrzeugs während der Fahrt helfen Funktionselemente durch Tasten zu erfassen und die gewünschten Schaltvorgänge auszulösen.

Der Bedienbereich kann mit anderen Worten durch einen farbigen, bevorzugt einen weißen oder schwarzen, Aufdruck, beispielsweise einem Siebdruck, auf der Innenscheibe, der Außenscheibe, aber auch innerhalb der Zwischenschicht markiert sein. Dies hat den besonderen Vorteil, dass der Bedienbereich unabhängig von einer Spannungsquelle und Lichteinstrahlmitteln, dauerhaft markiert ist. Der Aufdruck kann auch ein lumineszentes Material, bevorzugt ein fluoreszierendes oder phosphoreszierendes Material enthalten und/oder nachleuchtend sein. Auch der Einsatz von Hologrammen ist erfindungsgemäß möglich. Hierbei ist die Sichtbarkeit für den Nutzer durch die winkelabhängige Reflektion am höchsten.

Alternativ kann Licht durch einen Lichtleiter, der auf der Innenscheibe, der Zwischenschicht oder der Außenscheibe angeordnet ist, an den Bedienbereich herangeführt werden und diesen markieren.

Weiterhin kann in einer alternativen vorteilhaften Ausgestaltung der in der erfindungsgemäßen Herstellung einer Verbundscheibe vorgesehen sein, dass der Bedienbereich durch eine aktive Lichtquelle direkt markierbar ausgestaltet oder markiert wird. Bevorzugt kann dies durch eine Leuchtdiode (LED), eine organische Leuchtdiode (OLED), oder andere aktive Leuchtkörper, wie ein lumineszentes Material realisiert werden.

In einer bevorzugten Ausgestaltung des Verfahrens wird als Transmissionsschaltelement eine PDLC-Mehrschichtfolie eingesetzt.

In einer Ausgestaltung des Verfahrens ist das Transmissionsschaltelement ein PDLC-Funktionselement, welches in mindestens zwei funktionelle, optisch regelbare Segmente aufgeteilt wird, die unabhängig voneinander ansteuerbar sind. Die Aufteilung in die optisch regelbaren Segmente kann beispielsweise durch Ausgestaltung von einer oder mehreren Isolationslinien, beispielsweise durch Ätzen oder Laserbehandlung des PDLC-Funktionselements erfolgen kann. Beispielsweise könnte so für den Fahrer und den Beifahrer eines Kraftfahrzeugs jeweils eine unabhängig ansteuerbare und regelbare Sonnenblende realisiert werden. Gleichermaßen ist es möglich lamellenartige Segmente auszugestalten, die im Wesentlichen parallel beispielsweise zu einer Kante, beispielsweise der Oberkante der Verbundscheibe angeordnet sind. Hierdurch kann beispielsweise eine abgestufte Abschattung einer integrierten Sonnenblende für eine Windschutzscheibe oder aber auch eine Rollo-artige-Funktion für eine Dach- oder Seitenscheibe ermöglicht und realisiert werden.

In einer weiteren Ausgestaltung des Verfahrens ist erfindungsgemäß vorgesehen, dass auf der Außenscheibe zusätzlich oder alternativ zu dem mindestens einen Bedienbereich auf der Innenscheibe mindestens ein Bedienbereich mit mindestens einem transparenten Multi-Touch-Bedienpanel als Schaltelement ausgestaltet wird. Hierdurch wird es möglich, die Ansteuerung und Regelung von Funktionselementen, die von der Außenseite gesteuert werden sollen zu realisieren.

Weiterhin betrifft die Erfindung eine Verbundscheibe insbesondere eine Windschutzscheibe, Dachscheibe, oder Fensterscheibe für ein Fahrzeug mit integrierter elektrisch regelbarer Sonnenblende umfassend eine Innenscheibe eine Außenscheibe die über eine thermoplastischen Zwischenschicht miteinander verbunden sind, wobei die in der thermoplastischen Zwischenschicht mindestens in einem Teilabschnitt ein elektrisch regelbares Transmissionsschaltelement und mindestens ein zweites und ein drittes elektrisches Funktionselementen enthält, und weiterhin mindestens ein transparentes Multi-Touch-Bedienpanels zur Steuerung mindestens eines elektrischen Funktionselements enthält, welches in einem auf der Innenscheibe definierten Bedienbereich eine aktive Schaltfläche ausbildet, hergestellt nach einem vorstehend beschriebenen erfindungsgemäßen Verfahren.

Ferner erstreckt sich die Erfindung auch auf die Verwendung der erfindungsgemäßen Verbundscheibe in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als Gebäudeverglasung im Baubereich oder Architekturbereich im Innenbereich oder Außenbereich.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der Erfindung zu verlassen. Es sei denn Ausführungsbeispiele und/oder ihre Merkmale sind explizit nur als Alternativen genannt oder schließen sich aus.

Nachfolgend wird die Erfindung eingehender unter Bezugnahme auf die Figuren dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Die Zeichnungen sind vereinfachte, schematische Darstellungen und nicht maßstabsgetreu. Die Zeichnungen schränken die Erfindung in keiner Weise ein.

Es zeigen
- Figur 1: ein Flussdiagramm einer Ausführungsform des erfindungsgemäßen Verfahrens,
- Figur 2: eine Draufsicht auf deine Ausgestaltung einer erfindungsgemäßen Verbundscheibe am Beispiel einer Windschutzscheibe eines Fahrzeugs,
- Figur 3: eine Querschnittsansicht der Verbundscheibe entlang der Schnittlinie X-X' aus Figur 2,
- Figur 4: eine Ausführungsform eines Multi-Touch-Bedienpanels im Bedienbereich der Verbundscheibe aus Figur 2.

Weiterhin wird nachfolgend der Einfachheit halber in aller Regel immer nur auf eine Entität Bezug genommen. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Soweit nachfolgend Verfahren beschrieben werden, sind die einzelnen Schritte eines Verfahrens in beliebiger Reihenfolge anordbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar.

Angaben mit Zahlenwerten sind in aller Regel nicht als exakte Werte zu verstehen, sondern beinhalten auch eine Toleranz von +/- 1 % bis zu +/- 10 %.

Soweit in dieser Anmeldung Normen, Spezifikationen oder dergleichen benannt werden, werden zumindest immer die am Anmeldetag anwendbaren Normen, Spezifikationen oder dergleichen in Bezug genommen. D.h. wird eine Norm / Spezifikation etc. aktualisiert oder durch einen Nachfolger ersetzt, so ist die Erfindung auch hierauf anwendbar.

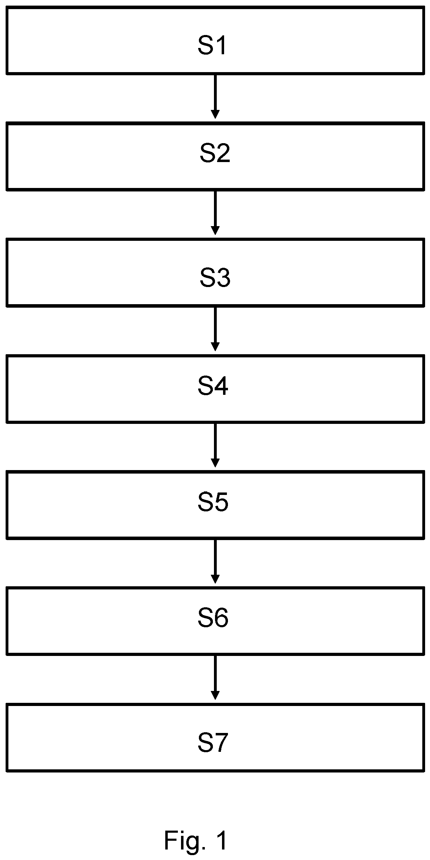

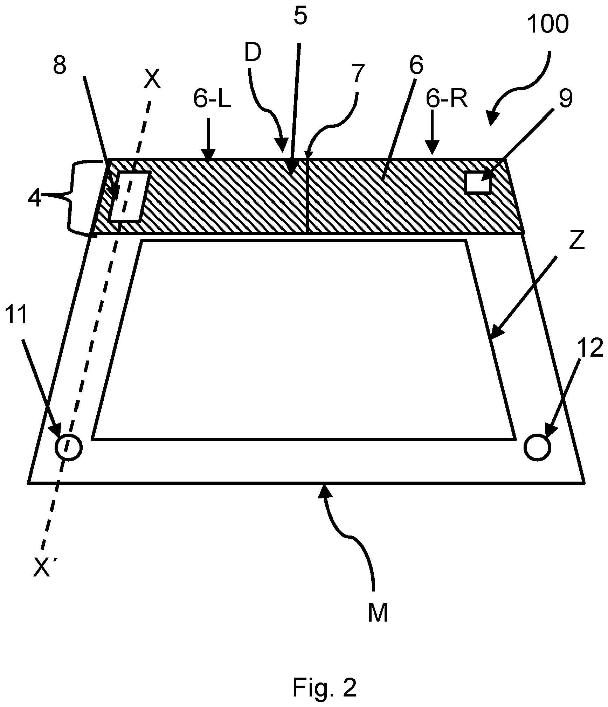

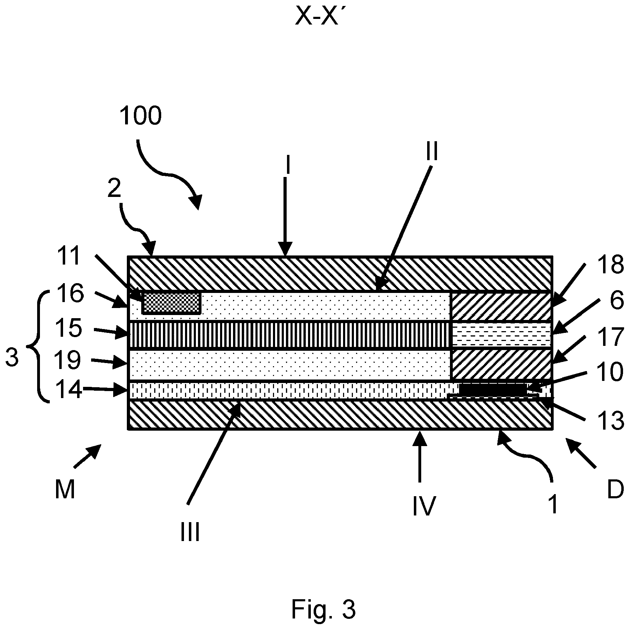

Figur 1 zeigt ein Flussdiagramm einer Ausführungsform erfindungsgemäßen Verfahrens. Die im Folgenden angegebenen Bezugszeichen und bezeichneten Elemente sind insbesondere den Figuren 2 und 3 zu entnehmen. Es umfasst die folgenden Verfahrensschritte:
S1: Bereitstellen einer Innenscheibe 1 mit mindestens einem definierten Bedienbereich 8, 9 für mindestens ein Schaltelement 10 zur Steuerung mindestens eines elektrisch regelbaren Funktionselements.
S2: Auflegen einer thermoplastischen Folie 13 mit einem darauf angebrachten transparenten Multi-Touch-Bedienpanel 10 als Schaltelement auf mindestens einen Bedienbereich 8,9 der Innenscheibe 1. Die thermoplastische Folie 13 wird dabei auf der innenseitigen Oberfläche III der Innenscheibe 1 (einzeln gezeigt in Figur 3) angeordnet. Vorteilhafterweise kann durch die thermoplastische Folie 13 eine zweckmäßig geringe Abstufung zur Oberfläche der Innenscheibe 1 ausgestaltet werden, so dass eine verspannungsarme und verzerrungsfreie Verbindung ermöglicht wird. Zudem wird erfindungsgemäß durch den Einsatz der thermoplastischen Folie 13 ein optisch besseres Erscheinungsbild erhalten. Besonders bevorzugt wird die thermoplastische Folie 13 mit einer aufgerauten Seite eingesetzt und diese aufgeraute Seite zur Innenscheibe 1 gerichtet aufgelegt. Überraschend konnte so die optische Qualität in der erhaltenen Verbundscheibe 100 nochmals verbessert werden. Im Verbindungsschritt wird durch diese Maßnahme die Entlüftung verbessert und eine Blasenbildung wirksam vermieden.
S3: Auflegen einer ersten thermoplastischen Schicht 14, wobei diese eine Ausnehmung zur Aufnahme des Multi-Touch-Bedienpanels 10 und der thermoplastischen Folie 13 aufweist. Durch das Vorsehen Ausnehmung wird vorteilhafterweise der sonst lokal entstehende Höhenunterschied zur Innenscheibe 1 entsprechend ausgeglichen und sorgt für eine verspannungsarme und von optischen Verzerrungen freie Verbindung in der resultierenden Verbundscheibe. Die Dicke der thermoplastischen Schicht wird daher zweckmäßigerweise auf die jeweils eingesetzten Schaltelemente abgestimmt, um beispielsweise Glasbruch durch einen lokalen Dickenunterschied durch die eingesetzten Schaltelemente zu vermeiden und eine optisch einwandfreie Verbindung herzustellen. Eine Überlappung am Rand des Multi-Touch-Bedienpanels wird, wie vorstehend in Schritt S2 beschrieben, gering gehalten, so dass durch den erfindungsgemäß zusätzlichen Einsatz der thermoplastischen Folie 13 kein Stress im Glas entstehen kann und vorteilhafterweise, insbesondere im Bereich des Sensorelements (Multi-Touch-Bedienpanel) das optische Erscheinungsbild verbessert und gleichzeitig qualitativ eine Verbesserung erzielt wird.
S4: Auflegen einer zweiten thermoplastischen Schicht 15, die mindestens in einem Teilabschnitt 4 ein Transmissionsschaltelement 6 als erstes elektrisches Funktionselement und mindestens ein zweites elektrisches Funktionselement enthält und diese rahmenförmig umgibt. Vorzugsweise wird die Dicke der thermoplastischen Schicht so gewählt, dass sie der des Transmissionsschaltelements entspricht. Beispielsweise kann die zweite thermoplastische Schicht eine Dicke von 0,3 mm bis 0,5 mm, beispielweise 0,38 mm aufweisen. In bevorzugten Ausführungsformen der Erfindung sind die Transmissionsschaltelemente als Flüssigkristallelement, insbesondere als Polymer-Flüssigkristallelement (engl. polymer dispersed liquid crystal, abgekürzt PDLC), insbesondere als PDLC-Mehrschichtfolie, oder als Polymer Dispersed Network Display (PNLC), als reverse mode PDLC- oder als elektrochromes Transmissionsschaltelement ausgeführt.
S5: Auflegen einer dritten thermoplastischen Schicht 16. In einer bevorzugten Ausgestaltung des erfindungsgemäßen Verfahrens ist vorgesehen, dass die dritte thermoplastische Schicht 16 einen gefärbten oder getönten Teilabschnitt 18 aufweist, der das Transmissionsschaltelement 6 in der zweiten thermoplastischen Schicht 15 überlappt und/ oder die dritte thermoplastische Schicht 16 weiterhin in einer dafür vorgesehenen Ausnehmung ein drittes elektrisches Funktionselement, beispielsweise eine LED 11 enthält. Der getönte oder gefärbte Teilabschnitt 18 der dritten thermoplastischen Schicht kann das Transmissionsschaltelement 6, beispielsweise eine PDLC-Mehrschichtfolie verdecken. Dadurch wird ein besonders ansprechendes Erscheinungsbild von der Außenseite der Verbundscheibe 100 erzeugt. Optional kann zwischen der ersten und der zweiten thermoplastischen Schicht 15 eine vierte thermoplastische Schicht 19 vorgesehen werden. Die vierte thermoplastische Schicht kann ebenfalls einen gefärbten Teilabschnitt 17 aufweisen, der das Transmissionsschaltelement 6, zumindest größtenteils überlappt. Durch diese erfindungsgemäße Maßnahme kann die resultierende Verbundscheibe dann sowohl auf der Innen- als auch auf der Außenseite im Teilbereich 4 des Transmissionsschaltelements 6, also im Bereich der damit realisierten integrierten Sonnenblende 5, optisch ansprechender ausgestaltet werden. Eine weitere bevorzugte Variante des erfindungsgemäßen Verfahrens sieht vor, dass in der dritten und/oder vierten thermoplastischen Schicht 16,19 mindestens ein weiteres elektrisches Funktionselement eingesetzt wird. Vorteilhafterweise ist es erfindungsgemäß möglich eine Vielzahl von Funktionen in die Verbundscheibe 100 zu integrieren.
S6: Auflegen einer Außenscheibe 2.
S7: Verbinden der so gebildeten Schichtfolge zu einer Verbundscheibe 100 mittels Einwirkung von Hitze, Druck und/oder Vakuum. In einer bevorzugten Ausführungsform der Erfindung umfasst der Schritt des Verbindens der Schichtfolge zur Verbundscheibe 100 als Teilschritte
   a) - eine Pre-Lamination in einem Temperaturbereich von 40-150 °C, beispielsweise bei 90 °C, und eine
   b) - eine Autoklavbehandlung.
   Durch die kombinierte Ausführung beider Teilschritte zum Verbinden der Schichtfolge aus Innenscheibe 1, Außenscheibe 2 und den die Zwischenschicht 3 ausbildenden thermoplastischen Einzelschichten und - Folien 13, 14, 15, 16, 19 kann eine verbesserte optische Qualität der resultierenden Verbundscheibe 100 erzielt und eine dauerhafte, stabile Haftung hergestellt werden.

Figur 2 zeigt eine Draufsicht auf eine Ausgestaltung einer erfindungsgemäßen Verbundscheibe 100 am Beispiel einer Windschutzscheibe eines Fahrzeugs. Die Windschutzscheibe umfasst eine Innenscheibe 1 (gezeigt in Figur 3) und eine Außenscheibe 2 (gezeigt in Figur 3), die über eine Zwischenschicht 3 (gezeigt in Figur 3) miteinander verbunden sind. Die Außenscheibe 2 kann beispielsweise eine Dicke von 2,1 mm aufweisen und aus einem Kalk-Natron-Glas bestehen. Das Kalk-Natron-Glas kann beispielsweise grün eingefärbt sein. Die Innenscheibe 2 kann beispielsweise eine Dicke von 1,6 mm aufweisen und aus einem klaren Kalk-Natron-Glas bestehen. Die Windschutzscheibe weist eine in Einbaulage dem Dach zugewandte Oberkante D und eine in Einbaulage dem Motorraum zugewandte Unterkante M auf. Die Innenscheibe 1 weist eine innenseitige Oberfläche III, und eine außenseitige Oberfläche IV auf, die Außenscheibe weist ebenfalls eine innenseitige Oberfläche II und eine außenseitige Oberfläche I auf. In Einbaulage weist die außenseitige Oberfläche I der Außenscheibe 2 in Richtung der Umgebung, die außenseitige Oberfläche IV der Innenscheibe 1 weist dagegen ins Fahrzeuginnere. Die inneren Oberflächen II und III weisen jeweils in die Verbundscheibe 100 hinein und sind mit der Zwischenschicht 3 verbunden.

Die Windschutzscheibe ist in einem Teilbereich 4 oberhalb des zentralen Sichtbereichs Z (definiert in ECE-R43) mit einer elektrisch regelbaren Sonnenblende 5 ausgestattet. Die Sonnenblende 5 ist durch ein Transmissionsschaltelement 6, vorzugsweise eine kommerziell erhältliche PDLC-Mehrschichtfolie, als erstes Funktionselement 6 ausgebildet, die in die thermoplastische Zwischenschicht 3 eingelagert ist. Die PDLC-Mehrschichtfolie 6 und damit die Sonnenblende 5 ist in der gezeigten Ausführung durch eine Isolationslinie 7 ein zwei unabhängig steuerbare Segmente 6-L und 6-R geteilt, so dass beispielsweise Fahrer und Beifahrerseite unabhängig voneinander abgeschattet werden können. Auf diese Weise können vorteilhafterweise klappbare, mechanische Sonnenblenden im Fahrzeuginneren entfallen.

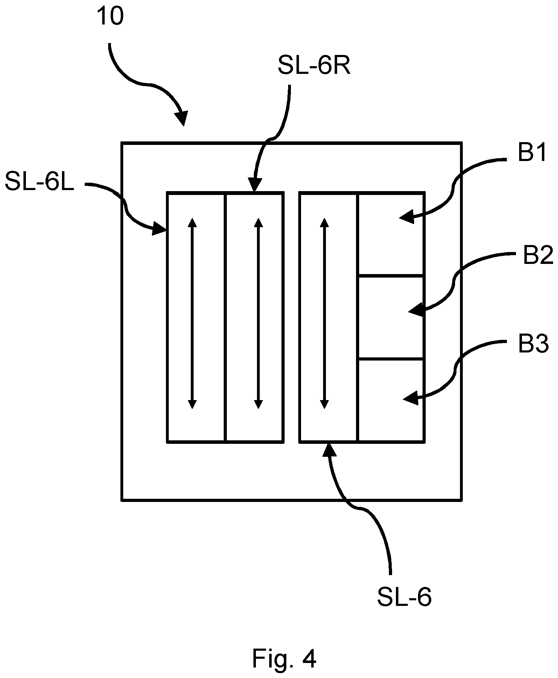

Im Teilbereich 4 sind zwei Bedienbereiche 8 und 9 ausgestaltet. Der erste Bedienbereich 8 umfasst erfindungsgemäß ein transparentes Multi-Touch-Bedienpanel 10 (hier nicht gezeigt, siehe Fig.4). Auf der ausgebildeten aktiven kapazitiven Schaltfläche des Multi-Touch Bedienpanels 10 können zwei oder mehr Berührungspunkte zeitgleich erkannt und ausgelöst werden. Das Erkennen einer zweiten Berührung auf der Schaltfläche bietet einem Bediener erweiterte Eingabemöglichkeiten. Durch die Multi-Touch Schaltmöglichkeit ist es beispielsweise möglich zwei oder mehr Funktionselemente gleichzeitig, oder ein Funktionselement mit mehreren und/oder komplexeren Schaltvorgängen zu steuern. Neben der einfachen Berührung sind auch komplexe Gesten, beispielsweise Zoomen, Rotieren oder Sliden/Wischen zur Schaltung und Steuerung möglich. Mit anderen Worten erlaubt es die Erfindung, eine effektive Steuerung einer Vielzahl von Funktionselementen oder von Funktionselementen mit einer Vielzahl und/oder komplexen Schaltvorgängen mit einer geringen oder geringeren Anzahl von Schaltelementen zur Verfügung zu stellen, als dies bisher möglich war.

Des Weiteren umfasst die gezeigte Ausgestaltung der Windschutzscheibe ein zweites elektrisches Funktionselement 11, beispielsweise eine LED und ein drittes elektrisches Funktionselement 12, beispielsweise eine OLED-Beleuchtung. Diese können beispielsweise Blindspot-Signal-Piktogrammme hinterleuchten. Es ist erfindungsgemäß umfasst, dass weitere hier nicht gezeigte elektrische Funktionselemente, wie Kameras, Heizungen, ausgestaltet sein können.

Bei der vorstehend beschriebenen Gestaltung von Logos oder Piktogrammen, beispielsweise mit einer LED 11 als Lichteinstrahlmittel können durch schwarze Aufkleber (nicht gezeigt), beispielsweise auf der innenseitigen Oberfläche (III) der Innenscheibe (1) eine Lichtleitung im Verbund, bewerkstelligt werden und den Eintrag von Streulicht der LED in den Innenraum bei der Ausgestaltung der Logos oder Piktogramme, beispielsweise eines Blindspot-Piktogramms, verhindert werden. Solche Aufkleber können beispielsweise eine Dicke von 0,1 bis 0,01 mm aufweisen.

Elektrische Anschlüsse, Leitungen und Kontaktierungen der Funktionselemente und Schaltelemente sind nicht gezeigt. Diese können in bekannter Art und Weise mit Standardverfahren ausgeführt sein und auf bekannte Weise erzeugt werden.

Figur 3 zeigt eine Querschnittsansicht der Verbundscheibe 100 entlang der Schnittlinie X-X' aus Figur 2, wobei die thermoplastischen Einzelschichten aus denen die Zwischenschicht 3 gebildet wird dargestellt sind. Auf der innenseitigen Oberfläche III der Innenscheibe 1 ist eine thermoplastische Folie 13 aufgelegt, auf der ein transparentes Multi-Touch-Bedienpanel 10 angeordnet ist. Im Weiteren ist auf der Innenscheibe 1 eine thermoplastische Schicht 14 aufgelegt, die eine Ausnehmung zur Aufnahme der thermoplastischen Folie 13 und des Multi-Touch-Bedienpanels 10 aufweist und an die Dicke des gebildeten Multi-Touch Einlegers 10, 13 angepasst ist. Hierdurch können die lokal sonst entstehenden Dickenunterschiede ausgeglichen werden und eine verspannungsarme und von optischen Verzerrungen freie Verbindung zur Verbundscheibe 100 ermöglichen. Die Ausgestaltung mit der thermoplastischen Folie 13 bewirkt überraschend eine Verbesserung des optischen Erscheinungsbilds der Verbundglasscheibe 100, wobei gleichzeitig die Funktionalität des Muli-Touch-Bedien-Panels 10 und dessen Berührungsempfindlichkeit ausreichend erhalten bleibt. Bevorzugt weist die thermoplastische Folie 13 eine größere Grundfläche als das transparente Multi-Touch-Bedienpanel 10 auf. Hierdurch können durch den stufenartigen Übergang in der Dicke, insbesondere an den Kanten des Multi-Touch-Bedienpanels 10 optische Verzerrungen vermieden und eine Verbesserung des optischen Erscheinungsbilds erzielt werden. In einer besonders bevorzugten Ausführungsform ist die zur Innenscheibe gerichtete Oberfläche der thermoplastischen Schicht 13 eine aufgeraute Oberfläche. Die Aufrauhung trägt überraschend nochmals zur Verbesserung der optischen Qualität bei, da sie eine verbesserte Entlüftung in diesem Bereich ermöglicht und eine Blasenbildung vermieden werden kann.

In der gezeigten, bevorzugten Ausführung des Verfahrens ist vorgesehen auf die erste thermoplastische Schicht, eine vierte thermoplastische Schicht mit einem gefärbten Teilabschnitt 17 aufgelegt und eingesetzt ist, die jedoch optional auch weggelassen werden kann. Auf die vierte thermoplastische Schicht 19 ist in der gezeigten Ausführungsform eine zweite thermoplastische Schicht 15 aufgelegt, die mindestens in einem Teilabschnitt 4 ein Transmissionsschaltelement 6 als erstes elektrisches Funktionselement und mindestens ein zweites elektrisches Funktionselement (nicht gezeigt), beispielsweise eine transparente OLED Beleuchtung oder transparentes Display, beispielsweise ein OLED Display enthält und diese rahmenförmig umgibt. Das Transmissionsschaltelement 6 kann einen Teilbereich der Fläche der Verbundglasscheibe 100 einnehmen oder gegebenenfalls auch im Wesentlichen die Fläche der Verbundscheibe 100 einnehmen. Bei einer Dachscheibe eines Fahrzeugs kann hiermit zum Beispiel ein Rollo realisiert werden. Bei einer Windschutzscheibe ist es jedoch vorgesehen, dass ein solches Transmissionsschaltelement nur außerhalb des zentralen Sichtfelds Z ausgestaltet wird.

Der gefärbte Teilabschnitt 17 der vierten thermoplastischen Schicht 19 überlappt das Transmissionsschaltelement 6, also beispielsweise eine PDLC-Mehrschicht-Folie und verdeckt diese zumindest größtenteils. Durch diese erfindungsgemäße Maßnahme kann die resultierende Verbundscheibe im Teilbereich 4 mit dem Transmissionsschaltelement 6, also im Bereich der damit realisierten integrierten Sonnenblende 5, optisch ansprechender ausgestaltet werden.

In der gezeigten bevorzugten Ausgestaltung ist vorgesehen, dass auf die zweite thermoplastische Schicht 15 eine dritte thermoplastische Schicht 16 aufgelegt ist, die ebenso wie die vierte thermoplastische Schicht 19 einen gefärbten oder getönten Teilabschnitt 18 aufweist, der das Transmissionsschaltelement 6 überlappt. Mit anderen Worten verdeckt der getönte oder gefärbte Bereich der dritten thermoplastischen Schicht das Transmissionsschaltelement 6 zur Außenscheibe 2 hin, oder steht sogar etwas über, erstreckt sich also flächenmäßig weiter als das Transmissionsschaltelement 6. Dadurch wird ein besonders ansprechendes Erscheinungsbild von der Außenseite der Verbundscheibe 100 erzeugt. In der gezeigten Ausführungsform ist in der dritten thermoplastischen Schicht 16 weiterhin eine LED (Light Emitting Diode) mit einem Flachbandleiter (nicht gezeigt) in eine Ausnehmung der thermoplastischen Schicht 16 einsetzt wird, die beispielsweise im unteren, der Motorkante M zugewandten Randbereich angeordnet ist. Diese LED 11 kann beispielsweise der Ausgestaltung eines beleuchteten, funktionellen Piktogramms, beispielsweise eines Blindspot-Piktogramms dienen.

Figur 4 zeigt eine Ausführungsform eines transparenten Multi-Touch-Bedienpanels 10 im Bedienbereich 8 der Verbundscheibe 100 aus Figur 2. Das Multi-Touch-Bedienpanel 10 kann verschiedenste aktive, kapazitive Schaltkombinationen ermöglichen. Im gezeigten Beispiel weist das Touch-Bedienpanel 10 verschiedene Sliderbereiche SL auf, die zur Steuerung mindestens des Transmissionsschaltelements 6 und dessen separat ansteuerbare Segmente 6L, 6R ausgelegt sind. Der Sliderbereich SL-6L steuert beispielsweise die Regelung des linken Segments des Transmissionsschaltelements 6L von transparent zu opak. Der Sliderbereich SL-6R steuert beispielsweise die Regelung des rechten Segments des Transmissionsschaltelements 6R von transparent zu opak. Der Sliderbereich SL-6 kann insgesamt die Regelung des gesamten Transmissionsschaltelements 6 ermöglichen. Mit anderen Worten kann so die Sonnenblende 5 mittels der Regelung der optischen Abschattung durch die Sliderbereiche SL-6L, SL-6R, SL-6 beispielsweise durch Wischen in Richtung der gezeigten Doppelpfeile insgesamt oder für die Segmente 6L und oder 6R einzeln realisiert werden. Zusätzlich zu den kapazitiven Sliderbereichen SL kann das Multi-Touch-Bedienpanel 10 weiterhin Touch-Button-Schaltelemente B1, B2, B3 zur Steuerung von einem oder mehreren Funktionselementen aufweisen. Die Kombination eines solchen transparenten Multi-Touch Bedienpanels 10 beispielsweise mit einer transparenten LED-, oder OLED Beleuchtung oder eines transparenten Displays (nicht gezeigt) kann zusätzlich eine Zustandsanzeige (wie an/aus) der Funktionen und beispielsweise Schaltelemente B1, B2, B3 ermöglichen.

Die vorliegende Erfindung stellt ein verbessertes Verfahren zur Herstellung einer Verbundscheibe mit integrierter Sonnenblende und mindestens zwei weiteren in die Verbundscheibe integrierten elektrischen Funktionselementen zur Verfügung. Zudem ist das Verfahren auch in der industriellen Serienfertigung anwendbar und ermöglicht eine einfache und kostengünstige Herstellung von Verbundscheiben mit einer Vielzahl von Funktions- und Bedienelementen, die durch die Integration eines transparenten Multi-Touch-Bedienpanels auch die Ausführung und Steuerung komplexer Funktionen erlauben. Es werden erfindungsgemäß weiterhin, Verbundscheiben mit einer integrierten Sonnenblende und mehreren in die Verbundscheibe integrierten elektrischen Funktionselementen bereitgestellt, die eine gegenüber dem Stand der Technik verbesserte Qualität und gleichzeitig ein verbessertes optisches Erscheinungsbild aufweisen.

### Bezugszeichenliste

- S1- S7: Verfahrensschritte
- 100: Verbundscheibe
- 1: Innenscheibe
- 2: Außenscheibe
- 3: Zwischenschicht
- 4: Teilbereich
- 5: Sonnenblende
- 6: Transmissionsschaltelement (PDLC)
- 7: Isolationslinie
- 8: Bedienbereich Multi-Touch-Bedienpanel
- 9: Bedienbereich
- 10: Multi-Touch-Bedienpanel
- 11: LED
- 12: OLED
- 13: Thermoplastische Folie
- 14: Erste thermoplastische Schicht
- 15: Zweite thermoplastische Schicht
- 16: Dritte thermoplastische Schicht
- 17: Getönter/gefärbter Teilbereich der vierten thermoplastischen Schicht
- 18: Getönter/gefärbter Teilbereich der dritten thermoplastischen Schicht
- 19: Vierte thermoplastische Schicht
- 6-L, 6-R: unabhängig steuerbare Segmente des Transmissionsschaltelements
- D: Oberkante der Windschutzscheibe, Dachkante
- M: Unterkante der Windschutzscheibe, Motorkante
- Z: zentraler Sichtbereich der Windschutzscheibe
- X-X': Schnittlinie
- I: außenseitige Oberfläche der Außenscheibe
- II: innenseitige Oberfläche der Außenscheibe
- III: innenseitige Oberfläche der Innenscheibe
- IV: außenseitige Oberfläche der Innenscheibe
- B1: Touch-Button
- B2: Touch-Button
- B3: Touch-Button
- SL: Sliderbereiche auf dem Multi-Touch-Bedienpanel
- SL-6L: Sliderbereiche auf dem Multi-Touch-Bedienpanel zur Steuerung eines linken Einzelsegments des Transmissionsschaltelements
- SL-6R: Sliderbereiche auf dem Multi-Touch-Bedienpanel zur Steuerung eines rechten Einzelsegments des Transmissionsschaltelements
- SL-6: Sliderbereich zur Steuerung des gesamten Transmissionsschaltelements

## Patentansprüche

1. Verfahren zur Herstellung einer Verbundscheibe (100), welches die folgenden Schritte umfasst:
- Bereitstellen einer Innenscheibe (1) mit mindestens einem definierten Bedienbereich (8, 9) für mindestens ein Schaltelement (10) zur Steuerung mindestens eines elektrisch regelbaren Funktionselements,
- Auflegen einer thermoplastischen Folie (13) mit einem darauf angebrachten transparenten Multi-Touch-Bedienpanel (10) als Schaltelement auf den mindestens einen Bedienbereich (8, 9) der Innenscheibe (1),
- Auflegen einer ersten thermoplastischen Schicht (14), wobei diese eine Ausnehmung zur Aufnahme des Multi-Touch-Bedienpanels (10) und der thermoplastischen Folie (13) aufweist,
- Auflegen einer zweiten thermoplastischen Schicht (15), die mindestens in einem Teilabschnitt (4) ein Transmissionsschaltelement als erstes elektrisches Funktionselement (6) und mindestens ein zweites elektrisches Funktionselement enthält und diese rahmenförmig umgibt,
- Auflegen einer dritten thermoplastischen Schicht (16)
- Auflegen einer Außenscheibe (2)
- Verbinden der so gebildeten Schichtfolge zu einer Verbundscheibe (100) mittels Einwirkung von Hitze, Druck und/oder Vakuum.

2. Verfahren nach Anspruch 1 wobei das Verbinden der Schichtfolge zur Verbundscheibe (100) eine
- eine Pre-Lamination in einem Temperaturbereich von 40°C bis 150 °C und/oder eine
- eine Autoklavbehandlung umfasst.

3. Verfahren nach Anspruch 2, wobei die Pre-Lamination über einen Zeitraum von 0,25 Stunden bis 25 Stunden ausgeführt wird.

4. Verfahren nach einem der Ansprüche 1 bis 3, wobei mindestens ein weiterer Bedienbereich (9) für mindestens ein Schaltelement definiert wird, wobei bevorzugt mindestens ein Schaltelement als Touch-Button ausgestaltet wird und im Bedienbereich (9) zwischen der Innenscheibe (1) und dem Schaltelement eine thermoplastische Folie aufgebracht ist.

5. Verfahren nach einem der Ansprüche 1 bis 4, wobei die thermoplastische Folie (13) zur Anordnung der Schaltelemente (10) im Bedienbereich (8, 9) jeweils auf einer Seite mit einer aufgerauten Oberfläche eingesetzt wird, und mit der aufgerauten Oberfläche auf die Innenscheibe (1) aufgelegt wird.

6. Verfahren nach einem der Ansprüche 1 bis 5, wobei die dritte thermoplastische Schicht einen gefärbten Teilabschnitt (18) aufweist, der das Transmissionsschaltelement (6) überlappt und/oder die dritte thermoplastische Schicht (16) weiterhin in einer dafür vorgesehenen Ausnehmung ein drittes elektrisches Funktionselement enthält.

7. Verfahren nach einem der Ansprüche 1 bis 6, wobei zwischen der ersten thermoplastischen Schicht (14) und der zweiten thermoplastischen Schicht (15) eine vierte thermoplastische Schicht (19) mit einem gefärbten Teilabschnitt (1) eingelegt wird, wobei der gefärbte Teilabschnitt (17) das Transmissionsschaltelement (6) mindestens teilweise überlappt.

8. Verfahren nach einem der Ansprüche 1 bis 7, wobei in der dritten und/oder vierten thermoplastischen Schicht (16, 19) mindestens ein weiteres elektrisches Funktionselement eingesetzt wird.

9. Verfahren nach einem der Ansprüche 1 bis 8, wobei in der dritten thermoplastischen Schicht (16) eine Leuchtdiode (LED) (11) mit einem Flachbandleiter in eine Ausnehmung einsetzt ist und wobei mindestens zwischen dem Flachbandleiter und der Außenscheibe (2) eine thermoplastische Folie eingelegt wird.

10. Verfahren nach einem der Ansprüche 1 bis 8, wobei in einem oder mehreren Teilbereichen der Innenscheibe (1) und/oder der Außenscheibe (2) auf einer oder beiden innenseitigen oder außenseitigen Oberflächen (I, II, III, IV) Lichtleitmittel, Maskierungsmittel und / oder Markierungsmittel vorgesehen werden.

11. Verfahren nach einem der Ansprüche 1 bis 10, wobei das Transmissionsschaltelement (6) eine PDLC-Mehrschichtfolie ist.

12. Verfahren nach einem der Ansprüche 1 bis 11, wobei das Transmissionsschaltelement eine PDLC-Mehrschichtfolie ist, die durch chemisches Ätzen oder Laserbehandlung in mindestens zwei funktionelle, optisch regelbare Segmente (6-L, 6-R) aufgeteilt wird, die unabhängig voneinander ansteuerbar und regelbar sind.

13. Verfahren nach einem der Ansprüche 1 bis 12, wobei auf der Außenscheibe (2) zusätzlich oder alternativ zu dem mindestens einen Bedienbereich (8) auf der Innenscheibe (1) mindestens ein Bedienbereich mit mindestens einem Multi-Touch-Bedienpanel (10) als Schaltelement ausgestaltet wird.

14. Verbundscheibe (100), insbesondere Windschutzscheibe, Dachscheibe, oder Fensterscheibe für ein Fahrzeug mit integrierter elektrisch regelbarer Sonnenblende umfassend eine Innenscheibe (1) eine Außenscheibe (2) die über eine thermoplastischen Zwischenschicht (3) miteinander verbunden sind wobei die Verbundscheibe (100) in der thermoplastischen Zwischenschicht (3) mindestens in einem Teilabschnitt ein elektrisch regelbares Transmissionsschaltelement (6) und mindestens ein zweites (11) und ein drittes elektrisches Funktionselement (12) enthält, und weiterhin in einem definierten Bedienbereich (8) auf der Innenscheibe (1) mindestens ein transparentes Multi-Touch-Bedienpanel (10) zur Steuerung mindestens eines elektrischen Funktionselements angeordnet ist, hergestellt nach einem Verfahren gemäß einem der Ansprüche 1 bis 13.

15. Verwendung der Verbundscheibe (100) nach Anspruch 14 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als Gebäudeverglasung im Baubereich oder Architekturbereich im Innenbereich oder Außenbereich.

## Claims

1. Method of manufacturing a composite pane (100), comprising the following steps:
- providing an inner pane (1) with at least one defined operating region (8, 9) for at least one switching element (10) for controlling at least one electrically controllable functional element,
- placing a thermoplastic film (13) with a transparent multi-touch operating panel (10) mounted thereon as a switching element on the at least one operating region (8, 9) of the inner pane (1),
- laying on a first thermoplastic layer (14), the latter having a recess for receiving the multi-touch operating panel (10) and the thermoplastic film (13),
- laying on a second thermoplastic layer (15) which contains, at least in a subsection (4), a transmission switching element as a first electrical functional element (6) and at least a second electrical functional element and surrounds these in a framelike manner,
- laying on a third thermoplastic layer (16)
- laying on an outer pane (2)
- bonding the sequence of layers thus formed to form a composite pane (100) by means of the action of heat, pressure and/or vacuum.

2. Method according to claim 1, wherein the bonding of the sequence of layers to form the composite sheet (100) comprises
- a pre-lamination in a temperature range from 40 °C to 150 °C and/or
- an autoclave treatment.

3. Method according to claim 2, wherein the pre-lamination is carried out over a period of 0.25 hours to 25 hours.

4. Method according to any one of claims 1 to 3, wherein at least one further operating region (9) is defined for at least one switching element, wherein preferably at least one switching element is configured as a touch button and a thermoplastic film is applied in the operating region (9) between the inner pane (1) and the switching element.

5. Method according to any one of claims 1 to 4, wherein the thermoplastic film (13) for arranging the switching elements (10) in the operating region (8, 9) is used in each case on one side with a roughened surface, and is placed with the roughened surface on the inner pane (1).

6. Method according to any one of claims 1 to 5, wherein the third thermoplastic layer has a colored partial section (18) which overlaps the transmission switching element (6) and/or the third thermoplastic layer (16) further contains a third electrical functional element in a recess provided therefor.

7. Method according to any one of claims 1 to 6, wherein a fourth thermoplastic layer (19) having a colored sub-portion (1) is inserted between the first thermoplastic layer (14) and the second thermoplastic layer (15), wherein the colored sub-portion (17) at least partially overlaps the transmission switching element (6).

8. Method according to any one of claims 1 to 7, wherein at least one further electrical functional element is inserted in the third and/or fourth thermoplastic layer (16, 19).

9. Method according to any one of claims 1 to 8, wherein a light-emitting diode (LED) (11) with a ribbon conductor is inserted into a recess in the third thermoplastic layer (16), and wherein a thermoplastic film is inserted at least between the ribbon conductor and the outer pane (2).

10. Method according to any one of claims 1 to 8, wherein light guiding means, masking means and/or marking means are provided in one or more partial areas of the inner pane (1) and/or the outer pane (2) on one or both inner-side or outer-side surfaces (I, II, III, IV).

11. Method according to any one of claims 1 to 10, wherein the transmission switching element (6) is a PDLC multilayer film.

12. Method according to any one of claims 1 to 11, wherein the transmission switching element is a PDLC multilayer film that is divided by chemical etching or laser treatment into at least two functional, optically controllable segments (6-L, 6-R) that can be driven and controlled independently of each other.

13. Method according to any one of claims 1 to 12, wherein on the outer pane (2), in addition or alternatively to the at least one operating region (8) on the inner pane (1), at least one operating region with at least one multi-touch operating panel (10) is designed as a switching element.

14. Composite pane (100), in particular a windshield, roof pane or window pane for a vehicle with integrated electrically controllable sun visor, comprising an inner pane (1), an outer pane (2) which are connected to one another via a thermoplastic intermediate layer (3), the composite pane (100) containing, in the thermoplastic intermediate layer (3), at least in a subsection, an electrically controllable transmission switching element (6) and at least a second (11) and a third electrical functional element (12), and furthermore, in a defined operating region (8) on the inner pane (1), at least one transparent multi-touch operating panel (10) for controlling at least one electrical functional element is arranged, produced according to a method according to any one of claims 1 to 13.

15. Use of the laminated pane (100) according to claim 14 in means of transport for land, air or water traffic, in particular in motor vehicles, for example as a windshield, rear window, side windows and/or roof window, and as a functional single piece, and as a built-in part in furniture, appliances and buildings, in particular as building glazing in the construction sector or architectural sector in the interior or exterior.

## Revendications

1. Procédé de fabrication d'une vitre composite (100), comprenant les étapes suivantes :
- fournir une vitre intérieure (1) avec au moins une zone de fonctionnement définie (8, 9) pour au moins un élément de commutation (10) destiné à commander au moins un élément fonctionnel contrôlable électriquement,
- placer un film thermoplastique (13) sur lequel est monté un panneau de commande multi-touch transparent (10) en tant qu'élément de commutation sur l'au moins une zone de fonctionnement (8, 9) de la vitre intérieure (1),
- placer une première couche thermoplastique (14), cette dernière présentant une cavité destinée à recevoir le panneau de commande multi-touch (10) et le film thermoplastique (13),
- placer une deuxième couche thermoplastique (15) qui contient, au moins dans une sous-section (4), un élément de commutation de transmission en tant que premier élément fonctionnel électrique (6) et au moins un deuxième élément fonctionnel électrique, et qui entoure ces derniers à la manière d'un cadre,
- placer une troisième couche thermoplastique (16)
- placer une vitre extérieure (2)
- relier la séquence de couches ainsi formées pour constituer une vitre composite (100) par l'action de la chaleur, de la pression et/ou du vide.

2. Procédé selon la revendication 1, dans lequel le collage de la séquence de couches pour former la feuille composite (100) comprend
- un pré-laminage dans une plage de température de 40 °C à 150 °C et/ou
- un traitement en autoclave.

3. Procédé selon la revendication 2, dans lequel le pré-laminage est effectué sur une période de 0,25 heure à 25 heures.

4. Procédé selon l'une quelconque des revendications 1 à 3, dans lequel au moins une autre zone de fonctionnement (9) est définie pour au moins un élément de commutation, dans lequel, de préférence, au moins un élément de commutation est configuré comme un bouton tactile et un film thermoplastique est appliqué dans la zone de fonctionnement (9) entre la vitre intérieure (1) et l'élément de commutation.

5. Procédé selon l'une quelconque des revendications 1 à 4, dans lequel le film thermoplastique (13) pour la disposition des éléments de commutation (10) dans la zone de fonctionnement (8, 9) est utilisé dans chaque cas sur un côté avec une surface rugueuse, et est placé avec la surface rugueuse sur la vitre intérieure (1).

6. Procédé selon l'une quelconque des revendications 1 à 5, dans lequel la troisième couche thermoplastique présente une partie colorée (18) qui recouvre l'élément de commutation de transmission (6) et/ou la troisième couche thermoplastique (16) contient en outre un troisième élément fonctionnel électrique dans une cavité prévue à cet effet.

7. Procédé selon l'une quelconque des revendications 1 à 6, dans lequel une quatrième couche thermoplastique (19) comportant une partie partielle colorée (1) est insérée entre la première couche thermoplastique (14) et la deuxième couche thermoplastique (15), la partie partielle colorée (17) recouvrant au moins partiellement l'élément de commutation de transmission (6).

8. Procédé selon l'une quelconque des revendications 1 à 7, dans lequel au moins un autre élément fonctionnel électrique est inséré dans la troisième et/ou la quatrième couche thermoplastique (16, 19).

9. Procédé selon l'une quelconque des revendications 1 à 8, dans lequel une diode électroluminescente (DEL) (11) avec un ruban conducteur est insérée dans une cavité de la troisième couche thermoplastique (16), et dans lequel un film thermoplastique est inséré au moins entre le ruban conducteur et la vitre extérieure (2).

10. Procédé selon l'une quelconque des revendications 1 à 8, dans lequel des moyens de guidage de la lumière, des moyens de masquage et/ou des moyens de marquage sont prévus dans une ou plusieurs zones partielles de la vitre intérieure (1) et/ou de la vitre extérieure (2) sur une ou les deux surfaces de la face intérieure ou de la face extérieure (I, II, III, IV).

11. Procédé selon l'une quelconque des revendications 1 à 10, dans lequel l'élément de commutation de transmission (6) est un film multicouche PDLC.

12. Procédé selon l'une quelconque des revendications 1 à 11, dans lequel l'élément de commutation de transmission est un film multicouche PDLC qui est divisé par gravure chimique ou traitement laser en au moins deux segments fonctionnels, optiquement contrôlables (6-L, 6-R) qui peuvent être pilotés et contrôlés indépendamment l'un de l'autre.

13. Procédé selon l'une quelconque des revendications 1 à 12, dans lequel sur la vitre extérieure (2), en plus ou à la place de l'au moins une zone de commande (8) sur la vitre intérieure (1), au moins une zone de commande avec au moins un panneau de commande multi-touch (10) est conçue comme un élément de commutation.

14. Vitre composite (100), en particulier pare-brise, vitre de toit ou vitre de véhicule avec pare-soleil intégré à commande électrique, comprenant une vitre intérieure (1), une vitre extérieure (2) reliées entre elles par une couche intermédiaire thermoplastique (3), la vitre composite (100) contenant, dans la couche intermédiaire thermoplastique (3), au moins dans une sous-section, un élément de commutation de transmission contrôlable électriquement (6) et au moins un deuxième (11) et un troisième élément fonctionnel électrique (12), et en outre, dans une zone de fonctionnement définie (8) sur la vitre intérieure (1), au moins un panneau de commande multitouch transparent (10) pour contrôler au moins un élément fonctionnel électrique est disposé, produit selon un procédé selon l'une quelconque des revendications 1 à 13.

15. Utilisation de la vitre composite (100) selon la revendication 14 dans les moyens de transport terrestres, aériens ou maritimes, en particulier dans les véhicules automobiles, par exemple en tant que pare-brise, lunette arrière, vitres latérales et/ou fenêtre de toit, et en tant que pièce unique fonctionnelle, et en tant qu'élément intégré dans les meubles, les appareils et les bâtiments, en particulier en tant que vitrage de bâtiment dans le secteur de la construction ou le secteur architectural, à l'intérieur ou à l'extérieur.
